# EUROPÄISCHE PATENTANMELDUNG

(11) **EP 1 512 525 A2**
(43) Veröffentlichungstag der Anmeldung: **09.03.2005**
(21) Anmeldenummer: 04011237.7
(22) Anmeldetag: 12.05.2004
(51) Int. Cl.: B29D 31/00, B29C 35/00, B29C 70/00

(54) **Verfahren zur Herstellung eines Bodenbelags aus einem elastomeren Material mit einer strukturierten Oberfläche**

(30) Priorität: 28.08.2003 DE 10340044
(71) Anmelder: Carl Freudenberg KG, 69469 Weinheim (DE)
(72) Erfinder: Spitzer, Serge, New York, NY 1006 (US)

(57) **Zusammenfassung**

Verfahren zur Herstellung eines Bodenbelags aus einem elastomeren Material mit einer strukturierten Oberfläche, bei dem die Oberfläche einer unvulkanisierten Bahnware mit statistisch verteilten, in einem das vulkanisierte Material nicht schädigenden Lösungsmittel löslichen Kristallen bestreut, in die Bahnware eingepresst, einem Vulkanisationsprozess unterzogen und mit dem genannten Lösungsmittel von der Oberfläche der vulkanisierten Bahnware entfernt werden.

## Beschreibung

Als Bodenbeläge werden, je nach Einsatzgebiet, unterschiedliche Materialien, Farbgebungen und Strukturierungen eingesetzt. Für besonders strapazierte Bodenbeläge, beispielsweise in öffentlichen Gebäuden, werden Bodenbeläge aus einem elastomeren Material verwendet, welches eine hohe Abriebfestigkeit hat und sein ansprechendes Aussehen über längere Zeit beibehält. Die Erfindung befasst sich mit dieser Art von Bodenbelägen.

Durch die europäische Patentanmeldung EP 0 399 959 A1 ist ein Bodenbelag aus elastomerem Material bekannt geworden, der mit ausgewölbten Reliefs versehen ist. Die Höhe der Reliefs beträgt zwischen 0,2 mm und 1,0 mm. Sie sind in Gruppen angeordnet und mit spiegelnden Flächen versehen, so dass, je nach Blickwinkel auf den Boden, der Boden ein unterschiedliches Aussehen erhält. Obwohl der Bodenbelag selbst einfarbig ist, erhält er durch die Spiegelflächen den gewünschten Effekt einer unterschiedlichen Farbgestaltung. Von Nachteil bei dieser Art von Bodenbelägen ist, dass sie schwer zu reinigen sind und auch einen erheblichen Rollwiderstand haben. Letzteres wirkt sich nachteilig insbesondere auf Flughäfen, Bahnhöfen und dergleichen aus, wenn die Passagiere Rollkoffer beziehungsweise Rolltaschen über den Bodenbelag ziehen.

Das Dokument DE 100 39 118 A1 beschreibt einen Bodenbelag aus einem elastomeren Material mit einer strukturierten Oberfläche, dessen Oberfläche mit unregelmäßig verteilten Eintiefungen versehen ist, die langgestreckter Gestalt sind und die sich teilweise berühren und / oder durchschneiden und eine Tiefe von 0,02 mm bis 0,2 mm bei einer Breite von 0,2 mm bis 2,5 mm und einer Länge von 5 mm bis 50 mm aufweisen. Entsprechende Bodenbeläge sollen eine hohe Haltbarkeit aufweisen, gut zu reinigen sein, einen möglichst geringen Rollwiderstand haben und eine geringe Abnutzung aufweisen.

Der Erfindung liegt die Aufgabe zugrunde, ein Verfahren zur Herstellung eines Bodenbelags anzugeben, das in einfacher Weise die Herstellung von Bodenbelägen gestattet, die Gehsicherheit durch die Vermeidung von Reflexionen erhöht und das Sichtbar werden von Abnutzungen oder Untergrund-Unebenheiten auf der Oberfläche des Belages unterdrückt.

Erfindungsgemäß wird die Aufgabe durch ein Verfahren zur Herstellung eines Bodenbelags aus einem elastomeren Material mit einer strukturierten Oberfläche gelöst, bei dem die Oberfläche einer unvulkanisierten Bahnware mit statistisch verteilten, in einem das vulkanisierte Material nicht schädigenden Lösungsmittel löslichen Kristallen bestreut, in die Bahnware eingepresst, einem Vulkanisationsprozess unterzogen und mit dem genannten Lösungsmittel von der Oberfläche der vulkanisierten Bahnware entfernt werden.
Die Oberflächenstruktur des Belages ist total ungerichtet und von reflexbrechender Natur.
Ein solcher Bodenbelag behält nahezu die guten Eigenschaften eines ebenen Bodenbelags bei, die beispielsweise in einem sehr geringen Rollwiderstand und guter Reinigungsfähigkeit bestehen und hat gleichzeitig ein verbessertes Aussehen, indem er an sich optisch gefällig wirkt und auch unerwünschte, geringfügige Abnutzungen nicht augenfällig werden. Die Vertiefungen sind so gering, dass sichtbare Schmutzablagerungen vermindert werden. Durch die Form der Vertiefungen und ihre unregelmäßige Anordnung auf der Oberfläche entsteht ein Erscheinungsbild, welches auch optisch sehr ansprechend ist.

In ihrer bevorzugten Ausformung werden Kristalle verwendet, die eine Kantenlänge (K) zwischen 1 bis 4 mm aufweisen. Die verwendeten Kristalle sind Kristalle anorganischer Salze, die vorzugsweise einen Schmelzpunkt oberhalb von 200°C haben.

Bevorzugt werden Kristalle, die in Wasser löslich sind.

Vorzugsweise werden Kristalle verwendet, die einer Siebfraktion entsprechen erhalten durch eine Sieblinie mit 4 mm Maschenweite bzw. eine Sieblinie mit 2,0 mm Maschenweite, je nach Dicke des Belags und Gestaltungswunsch.

Die Kristalle werden vorzugsweise in einer Menge von 1 bis 10 g/m² verwendet.

Vorteilhafter Weise wird der Bodenbelag einschichtig gefertigt.

Vorzugsweise wird der Bodenbelag in einer Stärke S von 2 mm bis 5 mm, vorzugsweise 2,5 mm bis 4 mm, gefertigt.

Der Vorteil eines solchen Bodenbelags gegenüber bekannten Bodenbelägen ist eine Verminderung des Glanzgrades, gemessen nach DIN 5036. Bei der Messung unter einem Einfallswinkel von 85° hat ein Bodenbelag mit glatter Oberfläche einen Reflektionsgrad von ca. 70 %, wohingegen der erfindungsgemäße Bodenbelag nur einen Reflektionsgrad von ca. 35 % aufweist. Dadurch wird aufgrund der psychologischen Wirkung eine höhere Gehsicherheit auf nicht-glänzenden Oberflächen erzielt. Dies ist von Vorteil in Anwendungen, bei denen aufgrund eines Streiflichteinfalles durch die Fensteranordnung ein hoher Glanz zu Unsicherheit beim Begehen führen kann.

Gleichzeitig werden durch die mattglänzende Oberfläche Unebenheiten des Untergrundes besser kaschiert als bei hochglänzenden Oberflächen. Zur weiteren Kaschierung von optisch beeinträchtigenden Unbodenunebenheiten kann bei dem Belag zusätzlich bereits vulkanisiertes Material in einer mittleren Teilchengröße von 80 µ in einer Menge von 2,5 g/m² aufgestreut werden.

Anhand eines Ausführungsbeispiels wird die Erfindung nachstehend näher erläutert.

Eine Rohlingsbahn des herzustellenden Belags in der Dicke von z.B. 2,5 mm wird zur Vulkanisation bereitgestellt, Kristalle von Kochsalz einer mittleren Seitenlänge von 2 mm und einer Dicke von 1 mm werden in einer Menge von 3 g/m² mittels einer Streueinrichtung statistisch auf der Rohlingsbahn verteilt und gemeinsam einer Bandpresse zugeführt. Die Vulkanisation erfolgt bei z.B. 170°C unter einem Druck von 0,5 MPa. Nachfolgend wird das Kochsalz durch eine Behandlung mit Wasser herausgewaschen.

## Patentansprüche

1. Verfahren zur Herstellung eines Bodenbelags aus einem elastomeren Material mit einer strukturierten Oberfläche, **dadurch gekennzeichnet, dass** die Oberfläche einer unvulkanisierten Bahnware mit statistisch verteilten, in einem das vulkanisierte Material nicht schädigenden Lösungsmittel löslichen Kristallen bestreut, in die Bahnware eingepresst, einem Vulkanisationsprozess unterzogen und mit dem genannten Lösungsmittel von der Oberfläche der vulkanisierten Bahnware entfernt werden.

2. Verfahren nach Anspruch 1, **dadurch gekennzeichnet, dass** Kristalle, die eine Kantenlänge (K) zwischen 1 bis 4 mm aufweisen, verwendet werden.

3. Verfahren nach Anspruch 1 oder 2, **dadurch gekennzeichnet, dass** Kristalle anorganischer Salze verwendet werden.

4. Verfahren nach einem der Ansprüche 1 bis 3, **dadurch gekennzeichnet, dass** Kristalle mit einem Schmelzpunkt oberhalb von 200°C verwendet werden.

5. Verfahren nach einem der Ansprüche 1 bis 4, **dadurch gekennzeichnet, dass** Kristalle, die in Wasser löslich sind, verwendet werden.

6. Verfahren nach einem der Ansprüche 1 bis 5, **dadurch gekennzeichnet, dass** Kristalle, die einer Siebfraktion entsprechen, erhalten durch eine Sieblinie mit 4 mm Maschenweite bzw. eine Sieblinie mit 2,0 mm Maschenweite, verwendet werden.

7. Verfahren nach einem der Ansprüche 1 bis 6, **dadurch gekennzeichnet, dass** Kristalle in einer Menge von 1 bis 10 g/m² verwendet werden.

8. Verfahren nach einem der Ansprüche 1 bis 7, **dadurch gekennzeichnet, dass** der Bodenbelag einschichtig gefertigt wird.

9. Verfahren nach einem der Ansprüche 1 bis 8, **dadurch gekennzeichnet, dass** der Bodenbelag in einer Stärke S von 2 mm bis 5 mm, vorzugsweise 2,5 mm bis 4 mm, gefertigt wird.
